# EUROPEAN PATENT SPECIFICATION

(11) **EP 2 980 111 B1**
(45) Date of publication and mention of the grant of the patent: **31.01.2018**
(21) Application number: 14776334.6
(22) Date of filing: 27.03.2014
(51) Int. Cl.: C08F 297/02, B60C 1/00, C08K 3/36, C08L 53/00, C08F 297/04, C08F 4/48, C08F 236/08, C08F 36/08

(54) **METHOD FOR PRODUCING RADIAL CONJUGATED DIENE RUBBER**
VERFAHREN ZUR HERSTELLUNG EINES STERNFÖRMIG GEBOGENEN DIENKAUTSCHUKS
PROCÉDÉ POUR PRODUIRE UN CAOUTCHOUC DIÈNE CONJUGUÉ RADIAL

(30) Priority: 29.03.2013 JP 2013073262
(43) Date of publication of application: 03.02.2016
(73) Proprietor: Zeon Corporation, Tokyo 100-8246 (JP)
(72) Inventor: SUGIMURA, Takeshi, Tokyo 100-8246 (JP)
(74) Representative: Beckmann, Claus
(86) International application number: PCT/JP2014/058761
(87) International publication number: WO 2014/157465

(56) References cited:
- WO-A1-2008/001907
- WO-A1-2010/131646
- JP-A- S6 481 811

## Description

### TECHNICAL FIELD

The present invention relates to a method of production of radial conjugated diene rubber, more particularly relates to a method for producing radial conjugated diene rubber which is excellent in manufacturing stability and processability and which can give cross-linked rubber which is excellent in wet grip property. Further, the present invention relates to radial conjugated diene rubber which is obtained by this method of production, a rubber composition which contains that radial conjugated diene rubber, and that cross-linked rubber.

### BACKGROUD ART

In recent years, it is known that by giving a conjugated diene polymer a radial structure, it is possible to improve various properties compared with a linear conjugated diene polymer. For example, it is known that when used as a rubber material for tire use, by making the conjugated diene polymer a radial structure, the compatibility with a filler is improved.

For example, Patent Document 1 discloses a method of production of a radial conjugated diene polymer which comprises using an alkali metal-reacted aromatic compound which has three or more carbon atoms which are directly bonded to an alkali metal atom and aromatic ring in one molecule as a polymerization initiator to polymerize a monomer mixture which contains at least a conjugated diene compound. According to the art of this Patent Document 1, the obtained radial conjugated diene rubber is one which has active ends, so by causing any modifier to react with the active ends, affinity with a filler can be improved.

### PRIOR ART DOCUMENTS

### PATENT DOCUMENTS

Patent Document 1: International Publication WO2010/131646A

### SUMMARY OF THE INVENTION

### PROBLEM TO BE SOLVED BY THE INVENTION

In this Patent Document 1, as the polymerization initiator, an alkali metal-reacted aromatic compound which has three or more carbon atoms which are directly bonded to an alkali metal atom and aromatic ring in one molecule is used, but the polymerization initiator has a lower compatibility with respect to the solvent which is used for polymerization compared with the conventionally used polymerization initiators and therefore has the problem of insufficient manufacturing stability.

The present invention was made in consideration of this actual situation and relates to a method for producing radial conjugated diene rubber which is excellent in manufacturing stability and processability and which can give cross-linked rubber which is excellent in wet grip property.

### MEANS FOR SOLVING THE PROBLEMS

The inventor engaged in intensive research for achieving the above object and as a result discovered that by causing a predetermined amount of isoprene to polymerize with a polymerization initiator which comprises an alkali metal-reacted aromatic compound which has three or more C₁ to C₁₀ alkali metal-reacted alkyl groups having an alkali metal atom bonded to the α-position which are bonded to a single aromatic ring, it is possible to improve the compatibility with the solvent which is used for polymerization. Further, the inventor discovered that by using the thus obtained radial isoprene polymer which has active ends to polymerize monomers which contain 1,3-butadiene or 1,3-butadiene and an aromatic vinyl compound, it is possible to improve the manufacturing stability at the time of polymerization, and, furthermore, possible to make the radial conjugated diene rubber which is obtained by the polymerization excellent in processability and give cross-linked rubber which is excellent in wet grip property and thereby completed the present invention.

That is, according to the present invention, there is provided a method of production of radial conjugated diene rubber comprising a first step of causing 65 to 500 moles of isoprene to polymerize, in the presence of an alkali metal-reacted aromatic compound which is represented by the following general formula (1), with respect to 1 mole of an alkali metal in the alkali metal-reacted aromatic compound so as to obtain a radial isoprene polymer which has active ends and a second step of causing monomers which contain 1,3-butadiene or 1,3-butadiene and an aromatic vinyl compound to polymerize to the active ends of the radial isoprene polymer.

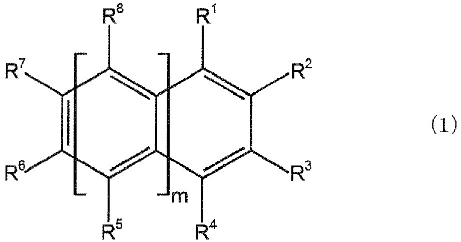

(In the general formula (1), R¹ to R⁸ respectively independently are a group which is selected from a hydrogen atom, C₁ to C₁₀ alkyl group, and C₁ to C₁₀ alkali metal-reacted alkyl group having an alkali metal atom bonded to the α-position, and three or more of R¹ to R⁸ are C₁ to C₁₀ alkali metal-reacted alkyl groups having an alkali metal atom bonded to the α-position. "m" is an integer of 0 to 5, when "m" is 2 or more, regardless of the structure expressed by general formula (1), three or more benzene rings may be condensed with each other at any positions.)

Further, according to the present invention, there is provided a radial conjugated diene rubber obtained by the above method of production.

According to the present invention, there is provided a modified radial conjugated diene rubber obtained by causing a modifier to react with the active ends of the above radial conjugated diene rubber.

Furthermore, according to the present invention, there is provided a rubber composition comprising 100 parts by weight of a rubber ingredient which contains the above radial conjugated diene rubber or the above modified radial conjugated diene rubber and 10 to 200 parts by weight of silica.

The rubber composition of the present invention is preferably one which further contains a cross-linking agent.

Further, according to the present invention, there is provided cross-linked rubber obtained by cross-linking the above rubber composition and a tire which contains the cross-linked rubber.

### EFFECTS OF THE INVENTION

According to the present invention, it is possible to provide radial conjugated diene rubber which is excellent in manufacturing stability and processability and which can give cross-linked rubber which is excellent in wet grip, a rubber composition which contains the radial conjugated diene rubber, cross-linked rubber which is excellent in wet grip property which obtained by cross-linking the rubber composition, and a tire which contains the cross-linked rubber.

### DESCRIPTION OF EMBODIMENTS

### <Method of Production of Radial Conjugated Diene Rubber>

The method of production of the radial conjugated diene rubber of the present invention comprises a first step of causing 65 to 500 moles of isoprene to polymerize, in the presence of an alkali metal-reacted aromatic compound which is represented by the following general formula (1), with respect to 1 mole of an alkali metal in the alkali metal-reacted aromatic compound so as to obtain a radial isoprene polymer which has active ends and a second step of causing monomers which contain 1,3-butadiene or 1,3-butadiene and an aromatic vinyl compound to polymerize to the active ends of the radial isoprene polymer.

### <First Step>

First, a first step in the method of production of the present invention will be explained. The first step in the method of production of the present invention is a step of causing 65 to 500 moles of isoprene to polymerize, in the presence of an alkali metal-reacted aromatic compound which is represented by the following general formula (1), with respect to 1 mole of an alkali metal in the alkali metal-reacted aromatic compound so as to obtain a radial isoprene polymer which has active ends.

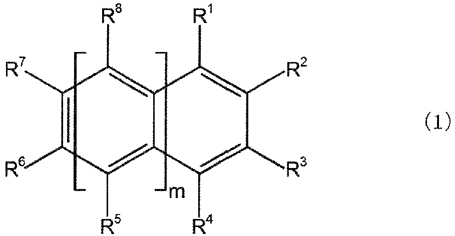

In the general formula (1), R¹ to R⁸ respectively independently are a group which is selected from a hydrogen atom, C₁ to C₁₀ alkyl group, and C₁ to C₁₀ alkali metal-reacted alkyl group having an alkali metal atom bonded to the α-position (the α-position of the aromatic ring shown the general formula (1)), and three or more of R¹ to R⁸ are C₁ to C₁₀ alkali metal-reacted alkyl groups having an alkali metal atom bonded to the α-position. "m" is an integer of 0 to 5, when "m" is 2 or more, regardless of the structure expressed by general formula (1), three or more benzene rings may be condensed with each other at any positions. Note that, the above "respectively independently" means, for example, that when "m" is 2 or more, the pluralities of R⁵ and R⁸ may be the same as each other or different.

In the above general formula (1), preferably "m" is 0, three of R¹, R², R³, R⁴, R⁶, and R⁷ are C₁ to C₁₀ alkali metal-reacted alkyl groups having an alkali metal atom bonded to the α-position, and the remaining groups of R¹, R², R³, R⁴, R⁶, and R⁷ are hydrogen atoms. Further, the alkali metal atom is not particularly limited, but lithium, sodium, or potassium is preferable. Among these as well, lithium is particularly preferable.

The alkali metal-reacted aromatic compound which is represented by the above general formula (1) is an alkali metal-reacted aromatic compound which has three or more C₁ to C₁₀ alkali metal-reacted alkyl groups having an alkali metal atom bonded to the α-position which are bonded to a single aromatic ring. In the alkali metal-reacted aromatic compound, the alkali metal atoms are usually present in the alkali metal-reacted aromatic compound in the form of cations. Further, the carbon atoms at the α-position which are directly bonded with the alkali metal atoms usually are present in the form of anions so as to bond with alkali metal atoms in the form of such cations. Further, in the alkali metal-reacted aromatic compound used in the present invention, the alkali metal atoms which are present in the form of cations in this way and the carbon atoms which are present in the form of anions form ion bonds and thereby are directly bonded with each other.

In the first step of the method of production of the present invention, as the polymerization initiator, an alkali metal-reacted aromatic compound which is represented by the above general formula (1), that is, an alkali metal-reacted aromatic compound which has three or more C₁ to C₁₀ alkali metal-reacted alkyl groups having an alkali metal atom bonded to the α-position which are bonded to a single aromatic ring is used. By causing this to react with isoprene, the three or more α-position carbon atoms directly bonded to the alkali metal atom contained in the alkali metal-reacted aromatic compound are used as polymerization starting points and the isoprene chain grows along with the living polymerization ability. For this reason, it is possible to make the isoprene polymer which is obtained by the polymerization one which has a radial structure.

The method of synthesis of the alkali metal-reacted aromatic compound which is used as a polymerization initiator in the present invention is not particularly limited, but a compound which is obtained by reacting an organic alkali metal compound with an aromatic compound which is represented by the following general formula (2) is preferably used.

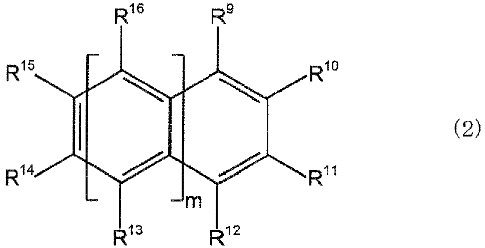

In the above general formula (2), R⁹ to R¹⁶ respectively independently are a hydrogen atom or C₁ to C₁₀ alkyl group, and three or more of R⁹ to R¹⁶ are a C₁ to C₁₀ alkyl group. "m" is an integer of 0 to 5. When "m" is 2 or more, regardless of the structure which is represented by the above general formula (2), the three or more existing benzene rings may be condensed at any positions. Note that, the above "respectively independently" means, for example, that when "m" is 2 or more, there are a plurality of R¹³ and R¹⁶ present, the plurality of R¹³ or R¹⁶ may be the same or may be different.

In the above general formula (2), preferably "m" is 0, three among R⁹, R¹⁰, R¹¹, R¹², R¹⁴, and R¹⁵ are C₁ to C₁₀ alkyl groups, and the remainder of R⁹, R¹⁰, R¹¹, R¹², R¹⁴, and R¹⁵ are hydrogen atoms.

As a specific example of the aromatic compound which is represented by the above general formula (2), benzenes which have three or more alkyl groups such as 1,2,3-trimethylbenzene, 1,2,4-trimethylbenzene, 1,3,5-trimethylbenzene, hexamethylbenzene, 1,2,3-triethylbenzene, 1,2,4-triethylbenzene, 1,3,5-triethylbenzene, 1,2,3-tripropylbenzene, 1,2,4-tripropylbenzene, 1,3,5-tripropylbenzene, 1,3,5-tributylbenzene, and 1,3,5-tripentylbenzene; naphthalenes which have three or more alkyl groups such as 2,3,5-trimethylnaphthalene, and 1,4,5-trimethylnaphthalene; etc. may be mentioned. Among these as well, benzenes which have three or more alkyl groups are preferable, while 1,3,5-trimethylbenzene is more preferable.

The organic alkali metal compound which is used for synthesizing the alkali metal-reacted aromatic compound used in the present invention is not particularly limited, but an alkali metal compound which has an alkyl group or aryl group is preferably used. As specific examples, methyllithium, methylsodium, methylpotassium, ethyllithium, ethylsodium, ethylpotassium, n-propyllithium, isopropylpotassium, n-butyllithium, s-butyllithium, t-butyllithium, n-butylsodium, n-butylpotassium, n-pentyllithium, n-amyllithium, n-octyllithium, phenyllithium, naphthyllithium, phenylsodium, naphthylsodium, etc. may be mentioned. Among these as well, an alkali metal compound which has an alkyl group is preferable, a lithium compound which has an alkyl group is more preferable, and n-butyllithium is particularly preferable.

To synthesize the alkali metal-reacted aromatic compound which is represented by the above general formula (1), when using an alkyl (or aryl) potassium or alkyl (or aryl) sodium, a lithium compound which has an alkyl group or aryl group and a potassium or sodium compound which has an alkoxyl group may be mixed to obtain the target potassium or sodium compound. As the potassium or sodium compound which has an alkoxyl group used at this time, t-butoxypotassium or t-butoxysodium may be illustrated. The amount of use of the potassium or sodium compound which has an alkoxyl group is not particularly limited, but is, for example, 0.1 to 5.0 moles with respect to 1 mole of the lithium compound which has an alkyl group or aryl group, preferably 0.2 to 3.0 moles, more preferably 0.3 to 2.0 moles.

The method for causing an organic alkali metal compound to react with the above-mentioned aromatic compound which is represented by the general formula (2) is not particularly limited, but the method of causing a reaction under an inert atmosphere in an inert solvent is preferably used. The inert solvent which is used is not particularly limited so long as a solvent which can dissolve a compound for the reaction, but a hydrocarbon-based solvent is preferably used. Specifically, aliphatic hydrocarbons such as n-hexane, n-heptane, and n-octane; alicyclic hydrocarbons such as cyclohexane, cyclopentane, and methylcyclohexane; etc. may be mentioned. Note that, these solvents may be used as single type alone or as two types or more mixed together. Further, the amount of use of the organic alkali metal compound with respect to the aromatic compound which is represented by the above general formula (2) is also not particularly limited, but is usually 0.1 to 100 moles with respect to 1 mole of the carbon atoms which are directly bonded to the aromatic rings in the aromatic compound, preferably 0.2 to 50 moles, more preferably 0.3 to 10 moles, particularly preferably 0.3 to 1.1 moles. The reaction time and reaction temperature of this reaction are also not particularly limited, but the reaction time is usually 1 minute to 10 days, preferably 1 minute to 5 days, while the reaction temperature is usually -50°C to 100°C.

Further, in causing the organic alkali metal compound to react with the above-mentioned aromatic compound which is represented by the general formula (2), it is also possible to establish the copresence of a compound which has a coordinating ability on alkali metal atoms for the purpose of promoting a reaction. As the compound which has a coordinating ability on alkali metal atoms, a Lewis base compound which contains a hetero atom is preferably used. Among these, a Lewis base compound which contains a nitrogen atom or oxygen atom is particularly preferably used. As specific examples of a Lewis base compound which contains a nitrogen atom or oxygen atom, a chain ether compound such as diethyl ether, anisole, diphenyl ether, dimethoxybenzene, dimethoxyethane, diglyme, and ethyleneglycol dibutyl ether; a tertiary amine compound which has one nitrogen atom in the molecule such as trimethylamine, and triethylamine; a cyclic ether compound having one oxygen atom in the molecule such as tetrahydrofuran, and tetrahydropyrane; a nitrogen-containing heterocyclic compound such as pyridine, lutidine, and 1-methylimidazole; a cyclic ether compound which has two or more oxygen atoms in the molecule such as bistetrahydrofuryl propane; a tertiary amine compound which has two or more nitrogen atoms in the molecule such as N,N,N',N'-tetramethylethylenediamine, dipiperidinoethane, 1,4-diazabicyclo [2.2.2] octane, (-)-sparteine, and N,N,N',N",N"-pentamethyldiethylene-triamine; a tertiary amide compound which has a nitrogen-hetero atom bond in the molecule such as hexamethylphosphoamide; etc. may be mentioned.

The amount of use of the compound which has a coordinating ability on alkali metal atoms is not particularly limited, but should be determined in accordance with the strength of the coordinating ability. For example, when using as the compound which has a coordinating ability on alkali metal atoms a compound with a relatively weak coordinating ability such as a chain ether compound or a tertiary amine compound which has one nitrogen atom in the molecule, the amount of use is usually 1 to 100 mol with respect to 1 mole of the alkali metal atom in the organic alkali metal compound which is made to react with the aromatic compound which is represented by the above general formula (2), preferably 5 to 50 mol, more preferably 10 to 25 mol in range. Further, when using as the compound which has a coordinating ability on alkali metal atoms a compound with a medium extent of coordinating ability such as a cyclic ether compound having one oxygen atom in the molecule or a nitrogen-containing heterocyclic compound, the amount of use is usually 1 to 100 mol with respect to 1 mole of the alkali metal atom in the organic alkali metal compound which is made to react with the aromatic compound which is represented by the above general formula (2), preferably 1 to 20 mol, more preferably 2 to 10 mol in range. Further, when using as the compound which has a coordinating ability on alkali metal atoms a compound with a relatively strong coordinating ability such as a cyclic ether compound which has two or more oxygen atom in the molecule or a tertiary amine compound which has two or more nitrogen atoms in the molecule, or a tertiary amide compound which has a nitrogen-hetero atom bond in the molecule, the amount of use is usually 0.01 to 5 mol with respect to 1 mole of the alkali metal atom in the organic alkali metal compound which is made to react with the aromatic compound which is represented by the above general formula (2), preferably 0.01 to 2 mol, more preferably 0.01 to 1.5 mol in range. If the amount of use of a compound which has a coordinating ability on alkali metal atoms is too great, the reaction is liable to no longer proceed. Note that, these compounds which have a coordinating ability to the alkali metal atoms may be used as single type alone or may be used as two types or more combined.

From the viewpoint of making the production efficiency of the alkali metal-reacted aromatic compound which is represented by the above general formula (1) particularly good and raising the ratio of radial isoprene polymer in the obtained isoprene polymer when causing a reaction with isoprene, as the compound which has a coordinating ability on alkali metal atoms, it is preferable to use at least one compound selected from a cyclic ether compound which has two or more oxygen atoms in the molecule, a tertiary amine compound which has two or more nitrogen atoms in the molecule, and a tertiary amide compound which has a nitrogen-hetero atom bond in the molecule and to make the amount of use 0.02 to 0.4 mol in range with respect to 1 mole of the alkali metal atom in the organic alkali metal compound which is made to react with the aromatic compound which is represented by the above general formula (2) .

In causing the organic alkali metal compound to react with the aromatic compound which is represented by the above general formula (2), when establishing copresence of a compound which has a coordinating ability on alkali metal atoms, the sequence of addition is not particularly limited. However, from the viewpoint of making the production efficiency of the alkali metal-reacted aromatic compound which is represented by the above general formula (1) particularly good, the sequence of establishing the copresence of the aromatic compound which is represented by the above general formula (2) and organic alkali metal compound, then adding to the system the compound which has a coordinating ability on alkali metal atoms or the sequence of establishing the copresence of the aromatic compound and the compound which has a coordinating ability on alkali metal atoms, then adding to the system an organic alkali metal compound is suitable. By adding the ingredients in such a sequence, insolubility due to the organic alkali metal compound and the compound which has a coordinating ability on alkali metal atoms forming a complex is prevented and the production efficiency of the alkali metal-reacted aromatic compound which is represented by the above general formula (1) becomes particularly good.

In the first step of the method of production of the present invention, for example, by using the above obtained alkali metal-reacted aromatic compound which is represented by the above general formula (1) as the polymerization initiator and causing 65 to 500 moles of isoprene to polymerize with 1 mole of the alkali metal in the alkali metal-reacted aromatic compound, a radial isoprene polymer which has active ends is obtained. In the present invention, by causing isoprene to polymerize with the alkali metal-reacted aromatic compound which is represented by the above general formula (1), it is possible to improve the compatibility with a solvent. That is, in the form of the alkali metal-reacted aromatic compound which is represented by the above general formula (1), the compatibility with respect to the inert solvent which is used for the polymerization is low, but according to the present invention, by causing isoprene to polymerize with the alkali metal-reacted aromatic compound which is represented by the above general formula (1) and thereby introducing an isoprene polymer chain, the compatibility with respect to a solvent is improved by the action of the isoprene polymer chain. In particular, according to the present invention, the thus obtained radial isoprene polymer which has active ends can be made to dissolve in the inert solvent which is used for the polymerization.

Note that, in the first step of the method of production of the present invention, the amount of isoprene used is 65 to 500 moles with respect to 1 mole of the alkali metal in the alkali metal-reacted aromatic compound which is represented by the above general formula (1), preferably 65 to 400 moles, more preferably 70 to 300 moles. If the amount of the isoprene used is too small, the effect of improvement of the compatibility with the inert solvent which is used for the polymerization can no longer be obtained and the manufacturing stability is liable to end up falling. On the other hand, if the amount of the isoprene used is too great, the solution viscosity is liable to end up becoming higher when dissolving the obtained radial isoprene polymer which has active ends in a solvent and the operability to end up falling.

Note that, the radial isoprene polymer which has active ends obtained in the first step of the present invention has a number average molecular weight (Mn) of preferably 1,500 to 100,000, more preferably 3,000 to 75,000, furthermore preferably 4,500 to 60,000. If the number average molecular weight (Mn) is too small, the effect of improvement of the compatibility with the inert solvent which is used for the polymerization is liable to no longer be obtained. On the other hand, if the number average molecular weight (Mn) is too large, the solution viscosity when dissolving the obtained radial isoprene polymer which has active ends in a solvent ends up becoming higher and the operability is liable to end up falling. Note that, the obtained radial isoprene polymer which has active ends is not particularly limited in the ratio (Mw/Mn) of the weight average molecular weight (Mw) and the number average molecular weight (Mn), that is, the molecular weight distribution, but it is preferably 1.0 to 3.0, more preferably 1.0 to 2.0. By making the molecular weight distribution of the radial isoprene polymer which has active ends in the above range, it is possible to improve the manufacturing stability.

Further, when performing a polymerization reaction of isoprene, for the purpose of controlling the polymerization speed or the microstructure of the obtained radial isoprene polymer which has active ends, it is also possible to add the above-mentioned compound which has a coordinating ability on alkali metal atoms to the polymerization reaction system. The amount of use of the compound which has a coordinating ability on alkali metal atoms is usually 5 moles or less with respect to 1 mole of the alkali metal atom in the alkali metal-reacted aromatic compound which is represented by the above general formula (1), preferably 4 moles or less, particularly preferably 2 moles or less. If the amount of use of the compounds which have coordinating abilities on alkali metal atoms is too great, the polymerization reaction is liable to be obstructed. Note that, when preparing the alkali metal-reacted aromatic compound which is represented by the above general formula (1), if using a compound which has a coordinating ability on alkali metal atoms, it becomes possible to use a solution which contains this compound as it is.

In particular, as the compound which has a coordinating ability on alkali metal atoms, it is preferable to establish the copresence of at least one compound which is selected from a cyclic ether compound which has two or more oxygen atoms in the molecule, a tertiary amine compound which has two or more nitrogen atoms in the molecule, and a tertiary amide compound which has a nitrogen-hetero atom bond in the molecule in 0.02 to 3.0 moles with respect to 1 mole of alkali metal atom in the alkali metal compound which is used as a polymerization initiator (the "alkali metal compound" which is referred to here not being limited to the alkali metal-reacted aromatic compound which is represented by the above general formula (1) but including all alkali metal compounds which are present in the reaction system and act as polymerization initiators). By doing this, it is possible to improve the compatibility of the obtained radial isoprene polymer which has active ends with a solvent.

The vinyl bond content in the isoprene unit part of the obtained radial isoprene polymer which has active ends is usually 1 to 90 mol%, preferably 5 to 80 mol%.

Further, the inert solvent which is used in the method of production of the first step of the present invention is not particularly limited so long as a solvent which is inert in the polymerization reaction, but it is preferable to use a hydrocarbon-based solvent. Specifically, an aromatic hydrocarbon such as benzene, toluene, xylene, and ethylbenzene; an aliphatic hydrocarbon such as n-hexane, n-heptane, and n-octane; an alicyclic hydrocarbon such as cyclohexane, cyclopentane, and methylcyclohexane; an ether such as tetrahydrofuran, diethyl ether, and cyclopentylmethyl ether, etc. may be mentioned. Among these, aliphatic hydrocarbons or alicyclic hydrocarbons are preferable since the polymerization activity becomes higher if they are used as solvents. These solvents may be used either alone or as a mixture of two or more thereof.

The concentration of isoprene which is used for the polymerization reaction is not particularly limited, but is usually selected in the range of 1 to 50 wt%, preferably 2 to 45 wt%, more preferably 5 to 40 wt%. If the concentration of isoprene in the solution is too low, the productivity of the radial isoprene polymer which has active ends is liable to become poorer. If the concentration is too high, the viscosity of the solution becomes too high and the handling sometimes becomes difficult. Further, the polymerization temperature is also not particularly limited, but is usually -30°C to +200°C, preferably 0°C to +180°C, in range. The polymerization time is also not particularly limited and is usually 1 minute to 100 hours. As the polymerization system, any of the batch system, continuous system, etc. can be employed.

Note that, in the present invention, the radial isoprene polymer which has active ends obtained in above-mentioned first step is preferably one which is obtained by polymerizing just isoprene, but it does not exclude the copolymerization of other monomers in a range where the effect of the present invention is not basically impaired.

### <Second Step>

Next, the second step of the method of production of the present invention will be explained.

The second step in the method of production of the present invention is a step of causing monomers which contain 1,3-butadiene or 1,3-butadiene and an aromatic vinyl compound to polymerize to the active ends of the radial isoprene polymer which has active ends obtained in the above-mentioned first step so as to obtain the radial conjugated diene rubber. That is, the second step of the method of production of the present invention is a step of causing monomers which contain 1,3-butadiene or 1,3-butadiene and an aromatic vinyl compound to polymerize to the active ends of the radial isoprene polymer which has active ends obtained in the above-mentioned first step as polymerization starting ends to obtain a radial conjugated diene rubber.

Note that, in the second step of the method of production of the present invention, the polymerization reaction of the monomers which contain 1,3-butadiene or 1,3-butadiene and an aromatic vinyl compound proceeds along with the living property, so the thus obtained radial conjugated diene rubber has active ends.

In the second step of the method of production of the present invention, it is also possible to not use the aromatic vinyl compound among the 1,3-butadiene and aromatic vinyl compound as the monomers which are used for the polymerization, but use only 1,3-butadiene to introduce a polymer chain which contains 1,3-butadiene at the active ends of the radial isoprene polymer. Alternatively, it is also possible to use both of the 1,3-butadiene and aromatic vinyl compound as the monomers which are used for polymerization to introduce a polymer chain which contains 1,3-butadiene and aromatic vinyl compound at the active ends of the radial isoprene polymer. It is possible to suitably select these according to the objective. Note that, in either case, it is also possible to jointly use other monomers besides 1,3-butadiene and aromatic vinyl compound to form a copolymer with the other monomers.

For example, if illustrating, as the case of the alkali metal-reacted aromatic compound which is represented by the above general formula (1), one where m=0, R², R⁴, and R⁷ are C₁ to C₁₀ alkali metal-reacted alkyl groups having alkali metal atom bonded to the α-position, and R¹, R³, and R⁶ are hydrogen atoms is used, when using only 1,3-butadiene as the monomer which is used for the polmerization in the second step, a radial conjugated diene rubber which is represented by the following general formula (3) is obtained. Further, when using only 1,3-butadiene and aromatic vinyl compound as the monomers which are used for the polymerization in the second step, a radial conjugated diene rubber which is represented by the following general formula (4) is obtained.

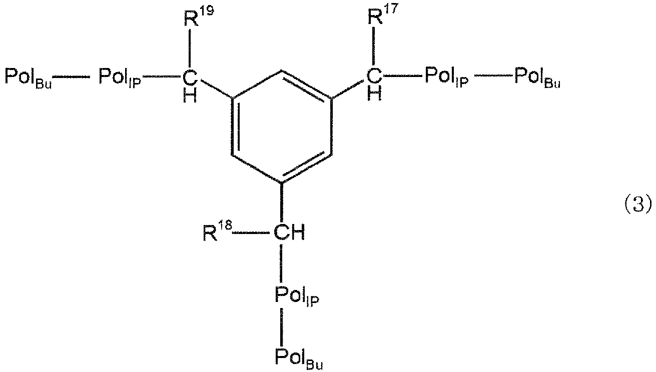

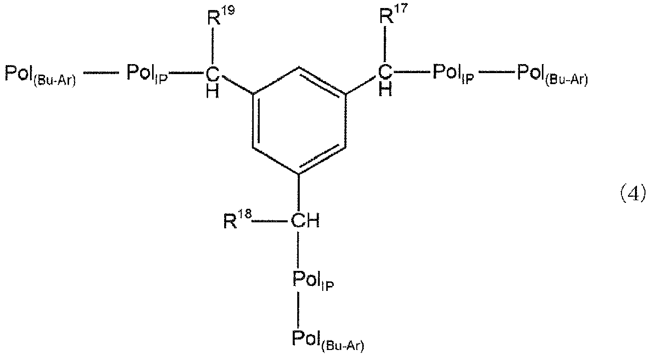

Note that, in the above general formulas (3) and (4), R¹⁷ to R¹⁹ are hydrogen atoms or C₁ to C₉ alkyl groups, Pol_{IP} is an isoprene polymer chain, Pol_{Bu} is a butadiene polymer chain, and Pol_{(Bu-Ar)} is a butadiene-aromatic vinyl polymer chain. Note that, the butadiene polymer chain which is represented by Pol_{Bu} and the butadiene-aromatic vinyl polymer chain which is represented by Pol_{(Bu-Ar)} grow along with the living polymerization ability, so these polymer chains usually have active ends having alkali metal atoms bonded to the polymer chain ends.

That is, when using only 1,3-butadiene as the monomer used for the polymerization, the butadiene polymer chain is formed radially from the aromatic compound which formed the alkali metal-reacted aromatic compound which is represented by the above general formula (1) through the isoprene polymer chain. Further, when using 1,3-butadiene and aromatic vinyl compound as the monomers which are used for polymerization, the butadiene-aromatic vinyl polymer chain is formed radially from the aromatic compound which formed the alkali metal-reacted aromatic compound which is represented by the above general formula (1) through the isoprene polymer chain. Note that, as the above general formulas (3) and (4), the case of using only 1,3-butadiene as the monomer which is used for polymerization and the case of using only 1,3-butadiene and aromatic vinyl compound as the monomers which are used for polymerization were illustrated, but in each of these cases as well, it is also possible to jointly use other monomers besides 1,3-butadiene and aromatic vinyl compound and copolymerize the monomers with these other monomers.

The aromatic vinyl compound of the monomer which is used for polymerization is not particularly limited. For example, styrene, α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, vinylnaphthalene, dimethylaminomethylstyrene, dimethylaminoethylstyrene, etc. may be mentioned. Among these as well, styrene, α-methylstyrene, or 4-methylstyrene is preferable, while styrene is particularly preferable. Note that, these aromatic vinyl compounds may be used as single type alone or may be used as two types or more combined. In the butadiene-aromatic vinyl polymer chain in the conjugated diene rubber which has active ends, the ratio of content of 1,3-butadiene monomer units is preferably 50 to 100 wt%, more preferably 55 to 90 wt%. Further, the ratio of content of the aromatic vinyl compound units is preferably 0 to 50 wt%, more preferably 10 to 45 wt%.

In the second step of the method of production of the present invention, the type of copolymerization when using 1,3-butadiene and an aromatic vinyl compound as the monomers which are used for polymerization is not particularly limited. Random, block, taper, and any other type may be used, but the random bonding type is preferable. By making the polymerization the random type, the obtained cross-linked rubber can be improved in low heat buildup property.

Further, in the second step of the method of production of the present invention, in a range not detracting from the object of the present invention, if desired, it is also possible to copolymerize other monomers in addition to 1,3-butadiene and aromatic vinyl compound. However, at this time, the ratio of content of the other monomer units is 10 wt% or less in the butadiene polymer chain or in the butadiene-aromatic vinyl polymer chain introduced in the second step in the conjugated diene rubber which has active ends, preferably 5 wt% or less. As such other monomers, for example, conjugated diene compounds other than 1,3-butadiene such as isoprene, 2,3-dimethyl-1,3-butadiene, 1,3-pentadiene, 2-methyl-3-ethyl-1,3-butadiene, 2-methyl-1,3-pentadiene, 1,3-hexadiene, an 1,3-cyclohexadiene; α,β-unsaturated nitriles such as acrylonitrile, and methacrylonitrile; unsaturated carboxylic acids or acid anhydrides such as acrylic acid, methacrylic acid, and maleic acid anhydride; unsaturated carboxylic acid esters such as methyl methacrylate, ethyl acrylate, and butyl acrylate; unconjugated dienes such as 1,5-hexadiene, 1,6-heptadiene, 1,7-octadiene, dicyclopentadiene, and 5-ethylidene-2-norbornene; etc. may be mentioned.

Note that the amount of use of the monomers which contain 1,3-butadiene or 1,3-butadiene and aromatic vinyl compound with respect to 1 mole of the active ends of the radial isoprene polymer which has active ends is not particularly limited, but is preferably 300 to 20,000 moles, more preferably 900 to 15,000 moles, particularly preferably 1,200 to 10,000 moles. If the amount of use of these is in the above range, a sufficiently long butadiene polymer chain or butadiene-aromatic vinyl polymer chain is obtained.

In the second step of the method of production of the present invention, when causing the monomers which contain 1,3-butadiene or 1,3-butadiene and aromatic vinyl compound to polymerize with the active ends of the radial isoprene polymer which has active ends, the polymerization is performed in an inert solvent. As the inert solvent, one similar to the above-mentioned first step can be used. From the viewpoint of control of the polymerization, it is preferable to add the radial isoprene polymer which has active ends obtained in the above-mentioned first step in a solution in which monomers which contain 1,3-butadiene or 1,3-butadiene and an aromatic vinyl compound are dissolved. Note that, the radial isoprene polymer is preferably used as is in the state made to dissolve in the inert solvent which is used for its preparation. As explained above, the radial isoprene polymer which has active ends used in the present invention is high in compatibility with the inert solvent which is used for the polymerization and, in particular, can be rendered a state dissolved in the inert solvent which is used for the polymerization. For this reason, according to the present invention, it is possible to perform the polymerization reaction of the monomers which contain 1,3-butadiene or 1,3-butadiene and aromatic vinyl compound contained in the state where the radial isoprene polymer which has active ends and act as starting points for polymerization is dissolved in an inert solvent. Due to this, it is possible to eliminate variation in the production process and therefore possible to improve the manufacturing stability.

Further, at the time of performing the polymerization reaction, for the purpose of controlling the polymerization speed and the microstructure of the obtained radial conjugated diene rubber, it is possible to add to the polymerization reaction system the above-mentioned such compound which has a coordinating ability on alkali metal atoms. The amount of use of the compound which has a coordinating ability on alkali metal atoms is usually 5 moles or less with respect to 1 mole of the alkali metal atom in the alkali metal-reacted aromatic compound which is represented by the above general formula (1), preferably 4 moles or less, particularly preferably 2 moles or less. If the amount of use of the compound which has a coordinating ability on alkali metal atoms is too great, the polymerization reaction is liable to be obstructed. Note that, when preparing the alkali metal-reacted aromatic compound which is represented by the above general formula (1) and the radial isoprene polymer which has active ends, if using the compound which has a coordinating ability on alkali metal atoms, the solution containing the compound can also be used as it is.

In particular, as the compound which has a coordinating ability on alkali metal atoms, it is preferable to establish the copresence of at least one compound which is selected from a cyclic ether compound which has two or more oxygen atoms in the molecule, a tertiary amine compound which has two or more nitrogen atoms in the molecule, and a tertiary amide compound which has a nitrogen-hetero atom bond in the molecule in 0.02 to 3.0 moles with respect to 1 mole of alkali metal atom in the alkali metal compound which is used as a polymerization initiator (the "alkali metal compound" which is referred to here not being limited to the alkali metal-reacted aromatic compound which is represented by the above general formula (1) but including all alkali metal compounds which are present in the reaction system and act as polymerization initiators). By doing this, it is possible to make the amount of vinyl bonds of the obtained radial conjugated diene rubber in a suitable range. As a result, the obtained cross-linked rubber becomes one which is excellent in low heat buildup property.

The concentration of the monomers in the polymerization solution which is used for the polymerization reaction is not particularly limited, but is usually selected in the range of 1 to 50 wt%, preferably 2 to 45 wt%, more preferably 5 to 40 wt%. If the concentration of the monomers in the solution is too low, the productivity of the radial conjugated diene rubber is liable to become poor, while if the concentration is too high, the viscosity of the solution becomes too high and the handling sometimes becomes difficult. Further, the polymerization temperature is also not particularly limited, but is usually -30°C to +200°C, preferably 0°C to +180°C. The polymerization time is also not particularly limited and is usually 1 minute to 100 hours. As the polymerization system, any of the batch system, continuous system, or other system may be employed, but when causing 1,3-butadiene and an aromatic vinyl compound to copolymerize, the batch system is preferable from the viewpoint of the ease of controlling the randomness of bonds between the 1,3-butadiene units and aromatic vinyl monomer units.

By using the radial isoprene polymer which has active ends obtained in the above-mentioned first step to polymerize the monomers which contain 1,3-butadiene or 1,3-butadiene and aromatic vinyl in the above way, it is possible to obtain a radial conjugated diene rubber. Note that, in the method of production of the present invention, usually the above-mentioned polymerization reaction proceeds along with the living property, so in the method of production of the present invention, the obtained radial conjugated diene rubber has active ends. The thus obtained radial conjugated diene rubber which has active ends may be made to react with reaction inhibitors such as alcohol and water, but it is also possible to cause reaction with any modifier which can react with the active ends so as to obtain modified radial conjugated diene rubber. By obtaining modified radial conjugated diene rubber in this way, it is possible to improve the obtained radial conjugated diene rubber by the modifier. For example, it is possible to improve the compatibility with a filler such as silica.

The modifier which is used to obtain the modified radial conjugated diene rubber is not particularly limited so long as a modifier which can react with the active ends of the rubber, but is preferably a silane compound which has an atom or reactive group which can react with the active ends of the rubber.

As such a modifier, for example, a compound which is represented by the following general formula (5) may be mentioned.

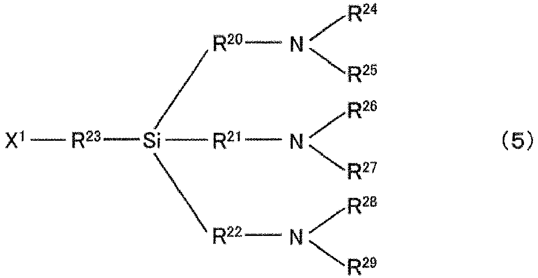

In the above general formula (5), X¹ is an atom or a reactive group which can react with active ends of the radial conjugated diene rubber or a hydrocarbon group which contains either of the atom or the reactive group, R²⁰ to R²³ respectively independently are a chemical single bond or C₁ to C₁₀ alkylene group, R²⁴ to R²⁹ respectively independently are a C₁ to C₁₀ alkyl group or C₆ to C₁₂ aryl group, R²⁴ to R²⁹ may be bonded with each other in combinations of R²⁴ and R²⁵, combinations of R²⁶ and R²⁷, and combinations of R²⁸ and R²⁹ and may form ring structures together with nitrogen atoms.

In the above general formula (5), the atom or reactive group which can react with the active ends of the radial conjugated diene rubber is not particularly limited. It need only be one which can react with the active ends. From the viewpoint of the reactivity with the active ends, however, a halogen atom, vinyl group, alkoxyl group, amino group, or epoxy group is preferable, an epoxy group or halogen atom is more preferable, a halogen atom is furthermore preferable, and a chlorine atom is particularly preferable.

In the above general formula (5), the hydrocarbon group which includes either of the atom or the reactive group is not particularly limited, but a C₁ to C₁₀ hydrocarbon group is preferable. Note that, this number of carbon atoms does not include the number of carbon atoms which form the reactive group.

Further, in the above general formula (5), R²⁰ to R²³ are respectively independently a chemical single bond or C₁ to C₁₀ alkylene group, a chemical single bond or C₁ to C₅ alkylene group is preferable, and a chemical single bond is particularly preferable.

Further, in the above general formula (5), R²⁴ to R²⁹ are respectively independently a C₁ to C₁₀ alkyl group or C₆ to C₁₂ aryl group, a C₁ to C₁₀ alkyl group is preferable, a C₁ to C₅ alkyl group is more preferable, and a methyl group is particularly preferable.

That is, among the compounds which are represented by the above general formula (5) as well, from the viewpoint of the effect of addition being particularly high, a compound of the above general formula (5) wherein X¹ is a chlorine atom, R²⁰ to R²³ are all chemical single bonds, and R²⁴ to R²⁹ are all methyl groups are particularly preferable.

Alternatively, as the modifier, a compound which is represented by the following general formula (6) may be used.

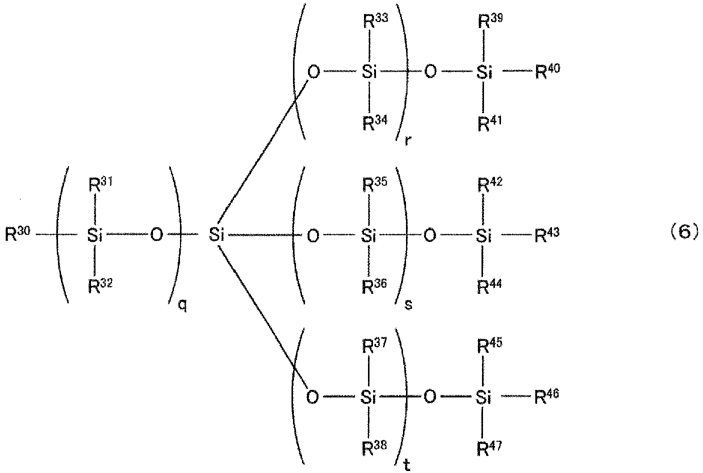

In the above general formula (6), any one of R³⁰, R³⁹ to R⁴⁷ is an atom or reactive group which reacts with the active ends of the radial conjugated diene rubber or a hydrocarbon group which includes at least either of the atom or the reactive group, while the remainder of R³⁰, R³⁹ to R⁴⁷ are independently a hydrogen atom, C₁ to C₁₀ alkyl group, or C₆ to C₁₂ aryl group. R³¹ to R³⁸ are respectively independently a hydrogen atom, C₁ to C₁₀ alkyl group, or C₆ to C₁₂ aryl group. "q", "r", "s", and "t" are respectively independently an integer of 0 to 100. Note that, the above "R³¹ to R³⁸ are respectively independently" means, for example, that when there are two or more of "q", "r", "s", and "t", there may be a plurality of R³¹ to R³⁸ present, but the plurality of R³¹, R³², R³³, R³⁴, R³⁵, R³⁶, R³⁷, and R³⁸ may be the same or may be different.

In the above general formula (6), the atom or reactive group which can react with the active ends of the radial conjugated diene rubber is not particularly limited and may be any which can react with the active ends, but from the viewpoint of the reactivity with the active ends, a halogen atom, vinyl group, alkoxyl group, amino group, or epoxy group is preferable, an epoxy group or halogen atom is more preferable, a halogen atom is furthermore preferable, and a chlorine atom is particularly preferable.

In the above general formula (6), the hydrocarbon group which contains either of the atom or the reactive group is not particularly limited, but a C₁ to C₁₀ hydrocarbon group is preferable. Note that, this number of carbon atoms does not include the number of carbon atoms which form the reactive group.

Further, in the above general formula (6), any one of R³⁰, R³⁹ to R⁴⁷ may be the atom or reactive group which can react with the active ends of the radial conjugated diene rubber or a hydrocarbon group which contains either of the atom or the reactive group, but more preferably R³⁰ is the atom or reactive group which can react with the active ends of the radial conjugated diene rubber or the hydrocarbon group which contains either of the atom or the reactive group, while the remaining R³⁹ to R⁴⁷ are hydrogen atoms, C₁ to C₁₀ alkyl groups, or C₆ to C₁₂ aryl groups. Further, as R³⁹ to R⁴⁷, C₁ to C₁₀ alkyl groups are more preferable, C₁ to C₅ alkyl groups are furthermore preferable, and methyl groups are particularly preferable.

Further, in the above general formula (6), "q", "r", "s", and "t" are respectively independently integers of 0 to 100. From the viewpoint of enabling the effect of modification to be further enhanced, "q", "r", "s", and "t" are preferably integers of 0 to 10, while "q", "r", "s", and "t" are particularly preferably all 0.

That is, among the compounds which are represented by the above general formula (6) as well, a compound where R³⁰ is chlorine, R³⁹ to R⁴⁷ are all methyl groups, and "q", "r", "s", and "t" are all 0 may preferably be used.

The amount of the modifier used is not particularly limited, but in the alkali metal-reacted aromatic compound which is represented by the above general formula (1) used as the polymerization initiator, the amount of the atoms or reactive groups which can react with the active ends of the radial conjugated diene rubber per 1 mole of alkali metal atom is preferably made an amount forming 0.05 to 5 moles in range, more preferably an amount forming 0.1 to 3 moles, particularly preferably an amount forming 0.5 to 1.5 moles. By making the amount of the modifier used in the above range, it is possible to make the effect of addition more remarkable. Note that, the modifier may be used as single type alone or may be used as two or more types combined.

The method of causing the modifier to react with the active ends of the radial conjugated diene rubber which is obtained at the above-mentioned second step is not particularly limited, but the method of mixing the radial conjugated diene rubber and modifier in a solvent which can dissolve these etc. may be mentioned. As the solvent which is used at this time, the ones which are illustrated as the inert solvents used in the above-mentioned first step and second step etc. may be used. Further, at this time, the method of making the radial conjugated diene rubber which is obtained at the above-mentioned second step a state of the polymerization solution which is used for this polymerization as it is and adding the modifier to it is simple and therefore preferable. The reaction temperature in the modification reaction is not particularly limited, but is usually 0 to 120°C. The reaction time is not particularly limited, but is usually 1 minute to 1 hour.

When not causing the modifier etc. to react with the radial conjugated diene rubber and unreacted active ends remain or when causing the modifier to react with the radial conjugated diene rubber but unreacted active ends remain, a polymerization inhibitor such as methanol, ethanol, isopropanol, or other alcohol or water is preferably added to the polymerization solution to deactivate the unreacted active ends.

To the solution of the radial conjugated diene rubber obtained in the above way, it is possible to add, as desired, an antioxidant such as a phenol-based stabilizer, phosphorus-based stabilizer, and sulfur-based stabilizer. The amount of the antioxidant added may be suitably determined in accordance with the type etc. Furthermore, if desired, an extension oil may also be blended in to obtain oil-extended rubber. As the extension oil, for example, a petroleum-based softening agent such as paraffin-based, aromatic-based, and naphthalene-based, plant-based softening agent, and fatty acid, etc. may be mentioned. When using a petroleum-based softening agent, the content of polycyclic aromatic which is extracted by the method of IP346 (method of testing of the Institute Petroleum of the UK) is preferably less than 3%. When using the extension oil, the amount of use is usually 5 to 100 parts by weight with respect to 100 parts by weight of the radial conjugated diene rubber. Further, the radial conjugated diene rubber after the polymerization reaction or after the modification reaction can be separated from the reaction mixture by, for example, reprecipitation, removal of the solvent under heating, removal of the solvent under vacuo, removal of solvent by steam (steam stripping), or other normal operation for separating rubber from a solution so as to obtain a solid type radial conjugated diene rubber.

According to such a method of production of the radial conjugated diene rubber of the present invention, as the polymerization initiator, the alkali metal-reacted aromatic compound which is represented by the above general formula (1) is used, so the conjugated diene polymer chain (isoprene polymer chain, butadiene polymer chain, and butadiene-aromatic vinyl polymer chain) grows along with the living polymerization ability by using the three or more α-position carbon atoms directly bonded to the alkali metal atom as starting points of polymerization, therefore it is possible to make the obtained conjugated diene rubber have a radial structure with good control. On the other hand, in method of production of the radial conjugated diene rubber of the present invention, by controlling the degree of modification by the alkali metal of the alkali metal-reacted aromatic compound which is represented by the above general formula (1), it is possible to obtain a polymer mixture in which the radial conjugated diene polymer and the chain conjugated diene polymer are mixed.

Note that, in the radial conjugated diene rubber which is obtained by the method of production of the present invention, the ratio of three or more branched conjugated diene rubber is not particularly limited, but is usually 10 to 100 wt%, preferably 20 to 100 wt%. By containing the three or more branched conjugated diene rubber in this ratio, the radial conjugated diene rubber can be further improved in processability and can be further enhanced in affinity with a fuller such as silica.

The radial conjugated diene rubber which is obtained by the method of production of the present invention is not particularly limited in the number average molecular weight (Mn), but the value which is measured by gel permeation chromatography converted to polystyrene is, for example, 10,000 to 3,000,000, preferably 50,000 to 2,000,000, more preferably 100,000 to 1,500,000. By making the number average molecular weight of the radial conjugated diene rubber in the above range, the mixing of silica into the radial conjugated diene rubber becomes easy and the processability of the rubber composition becomes excellent.

Further, the molecular weight distribution, which is expressed by the ratio (Mw/Mn) of the weight average molecular weight (Mw) and the number average molecular weight (Mn), of the radial conjugated diene rubber which is obtained by the method of production of the present invention is not particularly limited, but is preferably 1.1 to 5.0, particularly preferably 1.2 to 3.0. By making the molecular weight distribution of the radial conjugated diene rubber in the above range, the obtained cross-linked rubber becomes excellent in low heat buildup property.

Further, the radial conjugated diene rubber which is obtained by the method of production of the present invention is not particularly limited in Mooney viscosity (ML₁₊₄, 100°C), but it is usually 20 to 150, preferably 30 to 120. By making the Mooney viscosity of the radial conjugated diene rubber in the above range, the rubber composition becomes excellent in processability. Note that, if making the radial conjugated diene rubber an oil extended rubber, it is preferable to make the Mooney viscosity of the oil extended rubber in the above range.

Further, the radial conjugated diene rubber which is obtained by the method of production of the present invention usually has a vinyl bond content in the conjugated diene unit part of 1 to 90 mol%, preferably 5 to 80 mol%. By making the amount of vinyl bonds in the above range, the obtained cross-linked rubber becomes excellent in low heat buildup property.

In the thus obtained radial conjugated diene rubber of the present invention, as explained above, a radial isoprene polymer which has active ends as the starting points of polymerization is used when polymerizing monomers which contain 1,3-butadiene or 1,3-butadiene and aromatic vinyl compound. A radial isoprene polymer is high in compatibility with respect to the inert solvent which is used for polymerization. For this reason, it is possible to make the polymerization of the monomers which conatain 1,3-butadiene or 1,3-butadiene and aromatic vinyl compound advance in the state where the radial isoprene polymer which has active ends and acts as starting points for polymerization is made to dissolve well in the inert solvent which is used for polymerization. Due to this, it is possible to prevent the occurrence of variations in the production process and as a result it becomes possible to improve the manufacturing stability.

In addition, the thus obtained radial conjugated diene rubber of the present invention contains isoprene polymer chains in the production process. When mixing, into the radial conjugated diene rubber of the present invention, compounding ingredients such as silica and kneading the mixture, breakage occurs at part of the isoprene polymer chain, the compound viscosity (compound Mooney viscosity) falls, and more excellent processability is realized. Furthermore, the ends of the thus cut isoprene polymer chains interact with compounding ingredients such as silica whereupon the effect of improvement of the affinity with compounding ingredients such as silica can be exhibited.

### <Rubber Composition>

The rubber composition of the present invention is a composition which contains 10 to 200 parts by weight of silica with respect to 100 parts by weight of the rubber ingredient which contains the radial conjugated diene rubber (modified radial conjugated diene rubber) which is obtained by the above-mentioned method of production of the present invention.

As the silica used in the present invention, for example, dry-process white carbon, wet-process white carbon, colloidal silica, precipitated silica, etc. may be mentioned. Among these, wet-process white carbon mainly comprising hydrous silicic acid is preferaby used. Further, it is also possible to use a carbon-silica dual phase filler comprising carbon black on the surface of which silica is carried. These silica may be used either alone or as a combination of two or more thereof. The nitrogen adsorption specific surface area of the silica used (measured in accordance with ASTM D3037-81 by BET method) is preferably 50 to 300 m²/g, more preferably 80 to 220 m²/g, particularly preferably 100 to 170 m²/g. Further, the pH of the silica is preferably 5 to 10.

The amount of the silica in the rubber composition of the present invention is 10 to 200 parts by weight with respect to 100 parts by weight of the rubber ingredient in the rubber composition, preferably 30 to 150 parts by weight, more preferably 50 to 100 parts by weight. By making the amount of the silica in the above range, the processability of the rubber composition becomes excellent and the obtained cross-linked rubber becomes excellent in wet grip property.

The rubber composition of the present invention may further contain a silane coupling agent from the viewpoint of further improving the low heat buildup property. As the silane coupling agent, for example, vinyl triethoxysilane, β-(3,4-epoxycyclohexyl)ethyl trimethoxysilane, N-(β-aminoethyl)-γ-aminopropyl trimethoxysilane, 3-octathio-1-propyl-triethoxysilane, bis(3-(triethoxysilyl)propyl)disulfide, bis(3-(triethoxysilyl)propyl)tetrasulfide, γ-trimethoxysilylpropyldimethylthiocarbamyl tetrasulfide, γ-trimethoxysilylpropylbenzothiazyl tetrasulfide, etc. may be mentioned. These silane coupling agents may be used respectively alone or as two types or more combined. The amount of the silane coupling agent is preferably 0.1 to 30 parts by weight with respect to 100 parts by weight of silica, more preferably 1 to 15 parts by weight.

Further, the rubber composition of the present invention may further contain carbon black such as furnace black, acetylene black, thermal black, channel black, and graphite. Among these as well, furnace black is preferable. These carbon black may be used respectively alone or as two types or more combined. The amount of carbon black is usually 120 parts by weight or less with respect to 100 parts by weight of the rubber ingredient in the rubber composition.

Note that, the method of adding silica to the rubber ingredient which contains the modified conjugated diene rubber of the present invention is not particularly limited. The method of adding it and kneading it to a solid rubber ingredient (dry kneading method), the method of adding it to a solution which contains radial conjugated diene rubber then coagulation and drying the same (wet kneading method) etc. may be used.

Further, the rubber composition of the present invention preferably further contains a cross-linking agent. As the cross-linking agent, for example, sulfur, halogenated sulfur, organic peroxide, quinone dioximes, organic polybvalent amine compounds, alkylphenol resin which has methylol groups, etc. may be mentioned. Among these as well, sulfur is preferably used. The amount of the cross-linking agent is preferably 0.1 to 15 parts by weight with respect to 100 parts by weight of the rubber ingredient of the rubber composition, more preferably 0.5 to 5 parts by weight, particularly preferably 1 to 4 parts by weight.

Furthermore, the rubber composition of the present invention may contain, in addition to the above ingredients, in accordance with an ordinary method, a cross-linking accelerator, cross-linking activator, antioxidant, filler (excluding the above silica and carbon black), activator, process oil, plasticizer, lubricant, tackifier, or the compounding ingredient in the necessary amounts.

When using, a cross-linking agent, sulfur or sulfur-containing compound, a cross-linking accelerator and a cross-linking activator are preferably jointly used. As the cross-linking accelerator, for example, a sulfenamide-based cross-linking accelerator; guanidine- based cross-linking accelerator; thiurea-based cross-linking accelerator; thiazole-based cross-linking accelerator; thiuram-based cross-linking accelerator; dithiocarbamic acid-based cross-linking accelerator; xantogenic acid-based cross-linking accelerator; etc. may be mentioned. Among these as well, one containing a sulfenamide-based cross-linking accelerator is preferable. These cross-linking accelerators may be used respectively alone or as two types or more combined. The amount of cross-linking accelerator is preferably 0.1 to 15 parts by weight with respect to 100 parts by weight of the rubber ingredient in the rubber composition, more preferably 0.5 to 5 parts by weight, particularly preferably 1 to 4 parts by weight.

As the cross-linking activator, for example, higher fatty acid such as stearic acid; zinc oxide; etc. may be mentioned. These cross-linking activators may be used respectively alone or as two types or more in combination. The amount of cross-linking activator is preferably 0.05 to 20 parts by weight with respect to 100 parts by weight of the rubber ingredient, particularly preferably 0.5 to 15 parts by weight.

Further, the rubber composition of the present invention may contain other rubber besides the radial conjugated diene rubber which is obtained by the above-mentioned method of production of the present invention. The "other rubber" means, for example, natural rubber, polyisoprene rubber, emulsion polymerization styrene-butadiene copolymer rubber, solution polymerization styrene-butadiene copolymer rubber, polybutadiene rubber (either high cis-BR or low cis-BR. Further, may be polybutadiene rubber which contains crystal fibers comprising 1,2-polybutadiene polymer), styrene-isoprene copolymer rubber, butadiene-isoprene copolymer rubber, styrene-isoprene-butadiene copolymer rubber, acrylonitrile-butadiene copolymer rubber, acrylonitrile-styrene-butadiene copolymer rubber, etc. other than the radial conjugated diene rubber which is obtained by the above-mentioned method of production of the present invention. Among these as well, natural rubber, polyisoprene rubber, polybutadiene rubber, and solution polymerization styrene-butadiene copolymer rubber are preferable. These rubbers may be used respectively independently or as two or more types combined.

In the rubber composition of the present invention, the radial conjugated diene rubber which is obtained by the method of production of the present invention preferably accounts for 10 to 100 wt% of the rubber ingredient in the rubber composition, particularly preferably accounts for 50 to 100 wt%. By including the radial conjugated diene rubber of the present invention in the rubber ingredient by this ratio, it is possible to obtain cross-linked rubber which is improved in wet grip property.

To obtain the polymer composition of the present invention, the components may be kneaded in accordance with an ordinary method. For example, the compounding ingredients other than the cross-linking agent, cross-linking accelerator or other ingredients which are unstable against heat and the radial conjugated diene rubber are kneaded, then the kneaded matter is mixed with the cross-linking agent, cross-linking accelerator or other ingredients which are unstable against heat to obtain the target composition. The kneading temperature of the compounding ingredients other than the ingredients which are unstable against heat and the radial conjugated diene rubber is preferably 80 to 200°C, more preferably 120 to 180°C and the kneading time of that is preferably 30 seconds to 30 minutes. Further, the kneaded matter is mixed with the cross-linking agent and cross-linking accelerators after cooling usually down to 100°C or less, preferably 80°C or less.

### <Cross-Linked Rubber>

The cross-linked rubber of the present invention is obtained by cross-linking the above-mentioned rubber composition of the present invention.

The cross-linked rubber of the present invention can be produced by using the rubber composition of the present invention, for example, molding it by a molding machine which is designed for the desired shape, for example, an extruder, an injection molding machine, a press, a roll, etc., and heating it to cause a cross-linking reaction and fix the shape as a cross-linked product. In this case, it is possible to shape the composition in advance, then cross-link it or shape and cross-link it simultaneously. The molding temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 12 hours, particularly preferably 3 minutes to 6 hours.

Further, depending on the shape, size, etc. of the cross-linked rubber, sometimes even if the surface is cross-linked, the inside may not be sufficiently cross-linked, so the cross-linked rubber may be further heated for secondary cross-linking.

As the heating method, press heating, steam heating, oven heating, hot air heating, and other general methods which are used for cross-linking of rubber may be suitable selected.

The cross-linked rubber of the present invention which is obtained in this way is obtained using the radial conjugated diene rubber which is obtained by the above-mentioned method of production of the present invention, so is excellent in wet grip property. Further, the cross-linked rubber of the present invention, making use of such characteristics, for example, can be used in a tire as a material for tire parts such as captread, base tread, carcass, sidewalls, and bead part; a material for a hose, belt, mat, vibration insulator rubber, or other various industrial parts; an agent for improving the shock resistance of resins; a resin film buffer agent; a shoe sole; rubber shoes; golf balls; toys; and other various types of applications. In particular, the cross-linked rubber of the present invention is excellent in wet grip property, so it can be suitably used as a material of a tire and is optimum for tread applications.

### EXAMPLES

Below, the present invention will be explained based on more deailed examples, but the present invention is not limited to these examples. Note that, below, "parts" and "%" are based on weight unless otherwise indicated. Further, the tests and evaluations were performed as follows.

### [Molecular Weight of Rubber]

The molecular weight of the rubber was found as the molecular weight converted to polystyrene by gel permeation chromatography (GPC). The specific measurement conditions were made the following.
Measuring device: high performance liquid chromatograph (made by Toso, product name "HLC-8320")
Column: made by Toso, product name "GMH-HR-H", two connected in series.
Detector: differential refractometer (made by Toso, product name "RI-8320")
Eluent: tetrahydrofuran
Column temperature: 40°C

[Branching Degree of Rubber]

The branching degree of the rubber was measured by a multiangle light scattering photometer. The specific measurement conditions were made the following.
Pump: made by Waters, product name "MODEL 515"
Column: made by Toso, product name "GMH-HR-M", three connected in series.
Detector: differential refractometer (made by Waters, product name "RI-2414")
Detector: multiangle light scattering photometer (made by Wyatt Technology, product name "DAWN EOS")
Eluent: tetrahydrofuran
Column temperature: 23°C

### [Microstructure of Rubber]

Measured by ¹H-NMR.
Measuring device: made by JEOL, product name "JNM-ECA-400WB"
Measurement solvent: deuterochloroform

### [Lithiation Rate of Polymerization Initiator]

Measured by GC-MS.
GC: made by Agilent Technology, product name "Agilent GC 6890NGC"
MS: made by Agilent Technology, product name "Agilent MS 5973MSD"
Column: made by Agilent Technology, product name "DB1701"

### [Solubility of Polymerization Initiator and Radial Isoprene Polymer Which Has Active Ends With Cyclohexane]

The polymerization initiators and radial isoprene polymers which have active ends which were produced in the different Production examples were evaluated by the following criteria by allowing the obtained cyclohexane solution of the polymerization initiator or radial isoprene polymer which has active ends to stand for one day and visually confirming if the polymerization initiator or radial isoprene polymer which has active ends precipitated.
Good: No precipitate could be confirmed.
Poor: Precipitate formed.

### [Compound Viscosity (Compound Mooney Viscosity)]

The compound viscosity (ML₁₊₄, 100°C) (compound Mooney viscosity) of the rubber composition was measured in accordance with JIS K6300 using a Mooney viscometer (made by Shimadzu). This property was shown by an indexed value with respect to the measurement value of Comparative Example 1 as 100. The smaller this index, the lower the compound viscosity of the rubber composition and the better the processability.

### [Wet Grip Property]

The wet grip property was evaluated by measuring a test piece of a length 50 mm, width 12.7 mm, and thickness 2 mm using a viscoelasticity measuring device (made by Rheometrics, product name "ARES") to obtain the tanδ at 0°C under conditions of a dynamic strain of 0.5%, 10Hz. This property was shown by an indexed value with respect to the measurement value of Comparative Example 1 as 100. The smaller this index, the better the wet grip property when using the cross-linked rubber for a tire.

### [Production Example 1]

### [Production of Lithiated 1,3,5-trimethylbenzene]

Under a nitrogen atmosphere, a glass reaction vessel was charged with cyclohexane 16 parts, 1,3,5-trimethylbenzene 0.841 part, and tetramethylethylenediamine 0.813 part. Next, the mixture was stirred while adding n-butyllithium 1.345 parts (amount giving tetramethylethylenediamine 0.3 mole per 1 mole of n-butyllithium) and was stirred at a reaction temperature of 60°C for 2 days while reacting it to obtain a solution of lithiated 1,3,5-trimethylbenzene 18.999 parts. Next, for the purpose of measuring the lithiation rate of lithiated 1,3,5-trimethylbenzene which was obtained by the reaction, several drops of the obtained reaction solution were added to the glass container to which an excess amount of trimethylsilyl chloride was added and allowed to react for 30 minutes. Tap water was used to extract and wash the catalyst residue, then the solvent was distilled off to obtain a yellow oily liquid.

Further, this yellow oily liquid was measured by gas chromatography mass spectroscopy (GC-MS). The results were as follows.

EI-MS, m/z=120(M+) (3%), m/z=192(M+) (3%), m/z=264(M+) (24%), m/z=336(M+) (70%). Mw=120 (3%), Mw=192 (3%), Mw=264 (24%), Mw=336 (70%).

Next, this yellow oily liquid was measured by ¹H-NMR. The results were as follows.

¹H-NMR(CDCl₃) 6.83(s, 3H, Ph-H), 6.73(s, 1H, Ph-H), 6.64(s, 2H, Ph-H), 6.55(s, 2H, Ph-H), 6.47(s, 1H, Ph-H), 6.39(s, 3H, Ph-H), 2.30(s, 9H, Ph-CH₃), 2.28(s, 6H, Ph-CH₃), 2.02(s, 2H, Ph-CH₂-SiMe₃), 2.26(s, 3H, Ph-CH₃), 2.00(s, 4H, Ph-CH₂-SiMe₃), 1.98(s, 6H, Ph-CH₂-SiMe₃).

Furthermore, ¹H-detected multi-bond heteronuclear multiple quantum coherence spectrum-NMR (HMBC-NMR) measurement was used for attribution of the signals at ¹H-NMR. The results were as follows.

Non-substituted compound(1,3,5-trimethylbenzene)¹H-NMR(CDCl₃) 6.83(s, 3H, Ph-H), 2.30(s, 9H, Ph-CH₃), monosubstituted compound(1-trimethylsilylmethyl-3,5-dimethylbenzene)¹H-NMR(CDCl₃) 6.73(s, 1H, Ph-H), 6.64(s, 2H, Ph-H), 2.28(s, 6H, Ph-CH₃), 2.02(s, 2H, Ph-CH₂-SiMe₃), bisubstituted compound(1,3-bis(trimethylsilylmethyl)-5-methylbenzene)¹H-NMR(CDCl₃) 6.55(s, 2H, Ph-H), 6.47(s, 1H, Ph-H), 2.26(s, 3H, Ph-CH₃), 2.00(s, 4H, Ph-CH₂-SiMe₃), trisubstituted compound(1,3,5-tris(trimethylsilylmethyl)benzene)¹H-NMR(CDCl₃) 6.39(s, 3H, Ph-H), 1.98(s, 6H, Ph-CH₂-SiMe₃).

Based on the attribution based on the above ¹H-NMR, HMBC-NMR measurement, the molecular ion peaks obtained by GC-MS were attributed as follows. EI-MS, m/z=120(M+) was non-substituted compound (1,3,5-trimethylbenzene), m/z=192(M+) was monosubstituted compound (1-trimethylsilylmethyl-3,5-dimethylbenzene), m/z=264(M+) was bisubstituted compound (1,3-bis(trimethylsilylmethyl)-5-methylbenzene), and m/z=336(M+) was trisubstituted compound (1,3,5-tris(trimethylsilylmethyl)benzene). From the above, the ratio (molar ratio) of non-substituted compound: monosubstituted compound: bisubstituted compound: trisubstituted compound was found to be 3:3:24:70, the lithiation rate of the metal groups of 1,3,5-trimethylbenzene was 87%, and the average number of lithium atoms which were introduced into one molecule of 1,3,5-trimethylbenzene was 2.40.

### [Production Example 2]

### [Production of Radial Isoprene Polymer 1 Which Has Active Ends]

Under a nitrogen atmosphere, an autoclave was charged with cyclohexane 25 parts and isoprene 10.900 parts, then the lithiated 1,3,5-trimethylbenzene which was obtained in Production Example 1, 2.163 parts (amount in which use amount of isoprene with respect to 1 mole of lithium in the lithiated 1,3,5-trimethylbenzene (all substituted compounds) becomes 73.4 moles and, further, amount in which use amount of isoprene with respect to 1 mole of lithium in the trisubstituted compound becomes 104.9 moles) was added, and polymerization started at 60°C. The polymerization reaction was continued for 60 minutes. After the polymerization conversion rate was confirmed to be 95 to 100% in range, a solution which contains the radial isoprene polymer 1 which has active ends was obtained.

Further, the obtained radial isoprene polymer 1 which has active ends was measured by GPC whereupon the Mn was 34,100 and the molecular weight distribution (Mw/Mn) was 1.63. Further, the content of 1,2-bonds and 3,4-bonds in the isoprene polymer chain of the radial isoprene polymer 1 which has the active ends (vinyl bond content) was 46.6 mol%.

### [Production Example 3]

### [Production of Radial Isoprene Polymer 2 Which Has Active Ends]

Under a nitrogen atmosphere, an autoclave was charged with cyclohexane 25 parts, isoprene 10.900 parts, and tetramethylethylenediamine 0.500 part, then the lithiated 1,3,5-trimethylbenzene which was obtained in Production Example 1, 2.163 parts (amount in which use amount of isoprene with respect to 1 mole of lithium in the lithiated 1,3,5-trimethylbenzene (all substituted compounds) becomes 73.4 moles and, further, amount in which use amount of isoprene with respect to 1 mole of lithium in the trisubstituted compound becomes 104.9 moles) was added, and polymerization started at 60°C. The polymerization reaction was continued for 60 minutes. After the polymerization conversion rate was confirmed to be 95 to 100% in range, a solution which contains the radial isoprene polymer 2 which has active ends was obtained.

Further, the obtained radial isoprene polymer 2 which has active ends was measured by GPC whereupon the Mn was 21,200 and the molecular weight distribution (Mw/Mn) was 1.60. Further, the content of 1,2-bonds and 3,4bonds in the isoprene polymer chain of the radial isoprene polymer 2 which has the active ends (vinyl bond content) was 64.5 mol%.

### [Production Example 4]

### [Production of Radial Isoprene Polymer 3 Which Has Active Ends]

Under a nitrogen atmosphere, an autoclave was charged with cyclohexane 25 parts, isoprene 10.900 parts, and tetramethylethylenediamine 0.314 part, then the lithiated 1,3,5-trimethylbenzene which was obtained in Production Example 1, 1.370 parts (amount in which use amount of isoprene with respect to 1 mole of lithium in the lithiated 1,3,5-trimethylbenzene (all substituted compounds) becomes 117.4 moles and, further, amount in which use amount of isoprene with respect to 1 mole of lithium in trisubstituted compound becomes 167.7 moles) was added, and polymerization started at 60°C. The polymerization reaction was continued for 60 minutes. After the polymerization conversion rate was confirmed to be 95 to 100% in range, a solution which contains the radial isoprene polymer 3 which has active ends was obtained.

Further, the obtained radial isoprene polymer 3 which has active ends was measured by GPC whereupon the Mn was 31,300 and the molecular weight distribution (Mw/Mn) was 1.53. Further, the content of 1,2-bonds and 3,4-bonds in the isoprene polymer chain of the radial isoprene polymer 3 which has the active ends (vinyl bond content) was 65.6 mol%.

### [Production Example 5]

### [Production of Radial Isoprene Polymer 4 Which Has Active Ends]

Under a nitrogen atmosphere, an autoclave was charged with cyclohexane 25 parts, isoprene 10.900 parts, and tetramethylethylenediamine 0.256 part, then the lithiated 1,3,5-trimethylbenzene which was obtained in Production Example 1, 1.082 parts (amount in which use amount of isoprene with respect to 1 mole of lithium in the lithiated 1,3,5-trimethylbenzene (all substituted compounds) becomes 146.8 moles and, further, amount in which use amount of isoprene with respect to 1 mole of lithium in trisubstituted compound becomes 209.7 moles) was added, and polymerization started at 60°C. The polymerization reaction was continued for 60 minutes. After the polymerization conversion rate was confirmed to be 95 to 100% in range, a solution which contains the radial isoprene polymer 4 which has active ends was obtained.

Further, the obtained radial isoprene polymer 4 which has active ends was measured by GPC whereupon the Mn was 37,400 and the molecular weight distribution (Mw/Mn) was 1.50. Further, the content of 1,2-bonds and 3,4-bonds in the isoprene polymer chain of the radial isoprene polymer 4 which has the active ends was 67.0 mol%.

### [Production Example 6]

### [Production of Radial Isoprene Polymer 5 Which Has Active Ends]

Under a nitrogen atmosphere, an autoclave was charged with cyclohexane 25 parts, isoprene 10.900 parts, and tetramethylethylenediamine 2.500 parts, then the lithiated 1,3,5-trimethylbenzene which was obtained in Production Example 1, 10.815 parts (amount in which use amount of isoprene with respect to 1 mole of lithium in the lithiated 1,3,5-trimethylbenzene (all substituted compounds) becomes 14.7 moles and, further, amount in which use amount of isoprene with respect to 1 mole of lithium in trisubstituted compound becomes 21.0 moles) was added, and polymerization started at 60°C. The polymerization reaction was continued for 60 minutes. After the polymerization conversion rate was confirmed to be 95 to 100% in range, a solution which contains the radial isoprene polymer 5 which has active ends was obtained.

Further, the obtained radial isoprene polymer 5 which has active ends was measured by GPC whereupon the Mn was 6,800 and the molecular weight distribution (Mw/Mn) was 1.65. Further, the content of 1,2-bonds and 3,4-bonds in the isoprene polymer chain of the radial isoprene polymer 5 which has the active ends was 66.9 mol%.

### [Production Example 7]

### [Production of Radial Isoprene Polymer 6 Which Has Active Ends]

Under a nitrogen atmosphere, an autoclave was charged with cyclohexane 25 parts, isoprene 10.900 parts, and tetramethylethylenediamine 0.837 part, then the lithiated 1,3,5-trimethylbenzene which was obtained in Production Example 1, 3.605 parts (amount in which use amount of isoprene with respect to 1 mole of lithium in the lithiated 1,3,5-trimethylbenzene (all substituted compounds) becomes 44.0 mole and, further, amount in which use amount of isoprene with respect to 1 mole of lithium in trisubstituted compound becomes 62.9 moles) was added and polymerization was started at 60°C. The polymerization reaction was continued for 60 minutes. The polymerization conversion rate was confirmed to be 95 to 100% in range to obtain a solution which contains radial isoprene polymer 6 which has active ends.

Further, the obtained radial isoprene polymer 6 which has active ends was measured by GPC whereupon the Mn was 16,300 and the molecular weight distribution (Mw/Mn) was 1.49. Further, the content of 1,2-bonds and 3,4-bonds in the isoprene polymer chain of the radial isoprene polymer 6 which has the active ends was 70.0 mol%.

### [Example 1]

### [Production of Radial Conjugated Diene Rubber 1]

Under a nitrogen atmosphere, an autoclave was charged with cyclohexane 800 parts, 1,3-butadiene 94.8 parts, styrene 25.2 parts, and tetramethylethylenediamine 0.185 part, then a solution which contains the radial isoprene polymer 1 which has active ends which was obtained in Production Example 2, 13.712 parts was added and polymerization started at 60°C. The polymerization reaction was continued for 60 minutes. After the polymerization conversion rate was confirmed to be 95 to 100% in range, a polymerization inhibitor constituted by methanol 0.064 part was added to obtain a solution which contains the radial conjugated diene rubber 1.

Further, to the obtained solution which contains the radial conjugated diene rubber 1, an antioxidant constituted by 2,4-bis[(octylthio)methyl]-o-cresol (made by Ciba Specialty Chemicals, product name "Irganox 1520") 0.15 part was added with respect to 100 parts of the polymer ingredient, then steam stripping was used to remove the solvent. The result was dried in vacuo at 60°C for 24 hours to obtain a solid radial conjugated diene rubber 1.

The obtained radial conjugated diene rubber 1 was measured by GPC whereupon it was comprised of an eluted component with an Mn of 260,000 and Mw of 283,000 and with a molecular weight distribution (Mw/Mn) of 1.09 (peak area ratio 38.4%), an eluted component with an Mn of 581,000 and Mw of 592,000 and with a molecular weight distribution (Mw/Mn) of 1.02 (peak area ratio 28.9%), and an eluted component with an Mn of 945,000 and Mw of 979,000 and with a molecular weight distribution (Mw/Mn) of 1.04 (peak area ratio 32.7%). Overall, it had an Mn of 431,000 and Mw of 600,000 and a molecular weight distribution (Mw/Mn) of 1.39. Further, by multiangle light scattering measurement, it was confirmed that the branching degree of the peaks at the high molecular weight side was high. Further, the content of the styrene units in the styrene-butadiene polymer chain of this radial conjugated diene rubber 1 was 21.3 wt%, while the content of the vinyl bonds in the butadiene units was 61.6 mol%.

### [Preparation of Rubber Composition and Cross-Linked Rubber]

Next, in a capacity 250 ml Bravender type mixer, the above obtained radial conjugated diene rubber 1,100 parts was kneaded for 30 seconds, then silica (made by Rhodia, product name "Zeosil 1165MP") 50 parts, process oil (made by Nippon Oil Corporation, product name "Aromax T-DAE") 20 parts, and silane coupling agent: bis(3-(triethoxysilyl)propyl)disulfide (made by Degussa, product name "Si75") 6.4 parts were added and kneaded at 110°C as a starting temperature for 1.5 minute, then silica (made by Rhodia, product name "Zeosil 1165MP") 30 parts, zinc oxide 3.0 parts, stearic acid 2.0 parts, and antioxidant constituted by N-phenyl-N'-(1,3-dimethylbutyl)-p-phenylenediamine (made by Ouchi Shinko Chemical Industrial, product name "Nocrac 6C") 2.0 parts were added. The mixture was further kneaded for 2.5 minutes then the kneaded product was discharged from the mixer. The temperature of the kneaded product at the time of the end of kneading was 150°C. The kneaded product was cooled down to room temperature, then was again kneaded in a Bravender type mixer at 110°C as a starting temperature for 2 minutes, then the kneaded product was taken out from the mixer. Next, an open roll at 50°C was used to knead the obtained kneaded product and sulfur 1.60 parts and cross-linking accelerator (N-cyclohexyl-2-benzothiazolylsulfenamide (product name "Noccelar CZ-G", made by Ouchi Shinko Chemical Industrial) 1.40 parts and diphenylguanidine (product name "Noccelar D", made by Ouchi Shinko Chemical Industrial) 1.40 parts), then a sheet-shaped rubber composition was taken out.

Further, part of the rubber composition was taken out and measured for compound viscosity (compound Mooney viscosity). Further, the remaining rubber composition was cross-linked by pressing at 160°C for 25 minutes to prepare cross-linked rubber (test piece). This test piece was evaluated for wet grip property. The results are shown in Table 1. Note that, Table 1 shows the results of evaluation of the compound viscosity (compound Mooney viscosity) and wet grip property by ratios indexed to the results of the later explained Comparative Example 1 as 100.

### [Example 2]

Under a nitrogen atmosphere, an autoclave was charged with cyclohexane 800 parts, 1,3-butadiene 94.8 parts, and styrene 25.2 parts, then a solution which contains the radial isoprene polymer 2 which has active ends which was obtained in Production Example 3, 13.604 parts was added and polymerization started at 60°C. The polymerization reaction was continued for 60 minutes. After the polymerization conversion rate was confirmed to be 95 to 100% in range, a polymerization inhibitor constituted by methanol 0.064 part was added to obtain a solution which contains the radial conjugated diene rubber 2.

Further, to the obtained solution which contains the radial conjugated diene rubber 2, an antioxidant constituted by 2,4-bis[(octylthio)methyl]-o-cresol (made by Ciba Specialty Chemicals, product name "Irganox 1520") 0.15 part was added with respect to 100 parts of the polymer ingredient, then steam stripping was used to remove then solvent. The result was dried in vacuo at 60°C for 24 hours to obtain a solid radial conjugated diene rubber 2.

The obtained radial conjugated diene rubber 2 was measured by GPC whereupon it was comprised of an eluted component with an Mn of 209,000 and Mw of 268,000 and with a molecular weight distribution (Mw/Mn) of 1.28 (peak area ratio 45.7%), an eluted component with an Mn of 589,000 and Mw of 599,000 and with a molecular weight distribution (Mw/Mn) of 1.02 (peak area ratio 25.4%), and an eluted component with an Mn of 955,000 and Mw of 989,000 and with a molecular weight distribution (Mw/Mn) of 1.04 (peak area ratio 28.9%). Overall, it had an Mn of 343,000 and Mw of 560,000 and a molecular weight distribution (Mw/Mn) of 1.64. Further, by multiangle light scattering measurement, it was confirmed that the branching degree of the peaks at the high molecular weight side was high. Further, the content of the styrene units in the styrene-butadiene polymer chain of this radial conjugated diene rubber 2 was 21.9 wt%, while the content of the vinyl bonds in the butadiene units was 61.1 mol%.

Further, except for using the radial conjugated diene rubber 2 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### [Example 3]

Except for using, instead of a solution which contains the radial isoprene polymer 2, 13.604 parts, a solution which contains the radial isoprene polymer 3 which has active ends which was obtained in Production Example 4, 21.457 parts, the same procedure was followed as in Example 2 to produce a radial conjugated diene rubber 3. The obtained radial conjugated diene rubber 3 was measured by GPC whereupon it was comprised of an eluted component with an Mn of 203,000 and Mw of 254,000 and with a molecular weight distribution (Mw/Mn) of 1.25 (peak area ratio 47.5%), an eluted component with an Mn of 547,000 and Mw of 557,000 and with a molecular weight distribution (Mw/Mn) of 1.02 (peak area ratio 24.3%), and an eluted component with an Mn of 880,000 and Mw of 911,000 and with a molecular weight distribution (Mw/Mn) of 1.04 (peak area ratio 28.2%). Overall, it had an Mn of 322,000 and Mw of 513,000 and a molecular weight distribution (Mw/Mn) of 1.59. Further, by multiangle light scattering measurement, it was confirmed that the branching degree of the peaks at the high molecular weight side was high. Further, the content of the styrene units in the styrene-butadiene polymer chain of this radial conjugated diene rubber 3 was 21.3 wt%, while the content of the vinyl bonds in the butadiene units was 61.8 mol%.

Further, except for using the radial conjugated diene rubber 3 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### [Example 4]

Except for using, instead of a solution which contains the radial isoprene polymer 2, 13.604 parts, a solution which contains a radial isoprene polymer 4 which has active ends which was obtained in Manufacturing Example 5, 25.960 parts, the same procedure was followed as in Example 2 to produce a radial conjugated diene rubber 4. The obtained radial conjugated diene rubber 4 was measured by GPC whereupon it was comprised of an eluted component with an Mn of 212,000 and Mw of 268,000 and with a molecular weight distribution (Mw/Mn) of 1.26 (peak area ratio 37.5%), an eluted component with an Mn of 581,000 and Mw of 591,000 and with a molecular weight distribution (Mw/Mn) of 1.02 (peak area ratio 28.0%), and an eluted component with an Mn of 915,000 and Mw of 945,000 and with a molecular weight distribution (Mw/Mn) of 1.03 (peak area ratio 34.5%). Overall, it had an Mn of 381,000 and Mw of 592,000 and a molecular weight distribution (Mw/Mn) of 1.55. Further, by multiangle light scattering measurement, it was confirmed that the branching degree of the peaks at the high molecular weight side was high. Further, the content of the styrene units in the styrene-butadiene polymer chain of this radial conjugated diene rubber 4 was 21.4 wt%, while the content of the vinyl bonds in the butadiene units was 61.9 mol%.

Further, except for using the radial conjugated diene rubber 4 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### [Example 5]

Under a nitrogen atmosphere, an autoclave was charged with cyclohexane 800 parts, 1,3-butadiene 94.8 parts, and styrene 25.2 parts, then a solution which contains the radial isoprene polymer 2 which has active ends which was obtained in Production Example 3, 13.604 parts was added and polymerization started at 60°C. The polymerization reaction was continued for 60 minutes. After the polymerization conversion rate was confirmed to be 95 to 100% in range, tris(dimethylamino) chlorosilane 0.157 part was added, the mixture was reacted for 30 minutes, then a polymerization terminator constituted by methanol 0.064 part was added to obtain a solution which contains a modified radial conjugated diene rubber 1.

Further, to the obtained solution which contains the modified radial conjugated diene rubber 1, an antioxidant constituted by 2,4-bis[(octylthio)methyl]-o-cresol (made by Ciba Specialty Chemicals, product name "Irganox 1520") 0.15 part was added with respect to 100 parts of the polymer ingredient, then steam stripping was used to remove the solvent. The result was dried in vacuo at 60°C for 24 hours to obtain a solid modified radial conjugated diene rubber 1.

The obtained modified radial conjugated diene rubber 1 was measured by GPC whereupon it was comprised of an eluted component with an Mn of 219,000 and Mw of 271,000 and with a molecular weight distribution (Mw/Mn) of 1.24 (peak area ratio 43.8%), an eluted component with an Mn of 588,000 and Mw of 599,000 and with a molecular weight distribution (Mw/Mn) of 1.02 (peak area ratio 26.2%), and an eluted component with an Mn of 959,000 and Mw of 995,000 and with a molecular weight distribution (Mw/Mn) of 1.04 (peak area ratio 30.0%). Overall, it had an Mn of 362,000, Mw of 574,000 and a molecular weight distribution (Mw/Mn) of 1.56. Further, by multiangle light scattering measurement, it was confirmed that the branching degree of the peaks at the high molecular weight side was high. Further, the content of the styrene units in the styrene-butadiene polymer chain of this modified radial conjugated diene rubber 1 was 21.8 wt%, while the content of the vinyl bonds in the butadiene units was 61.3 mol%.

Further, except for using the modified radial conjugated diene rubber 1 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### [Comparative Example 1]

Except for using, instead of a solution which contains the radial isoprene polymer 1, 13.712 parts, a solution which contains lithiated 1,3,5-trimethylbenzene which was obtained in Production Example 1, 0.812 part, the same procedure was followed as in Example 1 to produce a radial conjugated diene rubber 5. The obtained radial conjugated diene rubber 5 was measured by GPC whereupon it was comprised of an eluted component with an Mn of 233,000 and Mw of 292,000 and with a molecular weight distribution (Mw/Mn) of 1.25 (peak area ratio 37.1%) and an eluted component with an Mn of 681,000 and Mw of 717,000 and with a molecular weight distribution (Mw/Mn) of 1.05 (peak area ratio 62.9%). Overall, it had an Mn of 398,000 and Mw of 559,000 and a molecular weight distribution (Mw/Mn) of 1.41. Further, by multiangle light scattering measurement, it was confirmed that the branching degree of the peaks at the high molecular weight side was high. Further, the content of the styrene units in the styrene-butadiene polymer chain of this radial conjugated diene rubber 5 was 20.7 wt%, while the content of the vinyl bonds in the butadiene units was 61.6 mol%.

Further, except for using the radial conjugated diene rubber 5 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### [Comparative Example 2]

Except for using, instead of a solution which contains radial isoprene polymer 2, 13.604 parts, a solution which contains the radial isoprene polymer 5 which has active ends which was obtained in Production Example 6, 2.828 parts, the same procedure was followed as in Example 2 to produce a radial conjugated diene rubber 6. The obtained radial conjugated diene rubber 6 was measured by GPC whereupon it was comprised of an eluted component with an Mn of 215,000 and Mw of 265,000 and with a molecular weight distribution (Mw/Mn) of 1.23 (peak area ratio 41.3%), an eluted component with an Mn of 585,000 and Mw of 596,000 and with a molecular weight distribution (Mw/Mn) of 1.02 (peak area ratio 30.5%), and an eluted component with an Mn of 904,000 and Mw of 930,000 and with a molecular weight distribution (Mw/Mn) of 1.03 (peak area ratio 28.2%). Overall, it had an Mn of 364,000 and an Mw of 553,000 and a molecular weight distribution (Mw/Mn) of 1.52. Further, by multiangle light scattering measurement, it was confirmed that the branching degree of the peaks at the high molecular weight side was high. Further, the content of the styrene units in the styrene-butadiene polymer chain of this radial conjugated diene rubber 6 was 21.0 wt%, while the content of the vinyl bonds in the butadiene units was 61.0 mol%.

Further, except for using the radial conjugated diene rubber 6 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### [Comparative Example 3]

Except for using, instead of a solution which contains the radial isoprene polymer 2, 13.604 parts, a solution which contains the radial isoprene polymer 6 which has active ends which was obtained in Production Example 7, 8.284 parts, the same procedure was followed as in Example 2 to produce a radial conjugated diene rubber 7. The obtained radial conjugated diene rubber 7 was measured by GPC whereupon it was comprised of an eluted component with an Mn of 211,000 and Mw of 258,000 and with a molecular weight distribution (Mw/Mn) of 1.22 (peak area ratio 44.0%), an eluted component with an Mn of 566,000 and Mw of 577,000 and with a molecular weight distribution (Mw/Mn) of 1.02 (peak area ratio 26.7%), and an eluted component with an Mn of 915,000 and Mw of 947,000 and with a molecular weight distribution (Mw/Mn) of 1.04 (peak area ratio 29.5%). Overall, it had an Mn of 347,000 and an Mw of 546,000 and a molecular weight distribution (Mw/Mn) of 1.57. Further, by multiangle light scattering measurement, it was confirmed that the branching degree of the peaks at the high molecular weight side was high. Further, the content of the styrene units in the styrene-butadiene polymer chain of this radial conjugated diene rubber 7 was 21.2 wt%, while the content of the vinyl bonds in the butadiene units was 62.2 mol%.

Further, except for using the radial conjugated diene rubber 7 which was obtained above instead of the radial conjugated diene rubber 1, the same procedure was followed as in Example 1 to produce a rubber composition and prepare cross-linked rubber (test piece) and the same procedure was followed to evaluate it. The results are shown in Table 1.

### Table 1

**Table 1**

| | Type and property of radial isoprene polymer which has active ends | | | Type of modifier | Compound viscosity | Wet grip property |
|---|---|---|---|---|---|---|
| | Type | Use amount of isoprene with respect to 1 mole of lithium of lithiated 1,3,5-trimethylbenzene (trisubstituted compound) (moles) | Solubility in cyclohexane | | | |
| Example 1 | Radial isoprene polymer 1 which has active ends | 104.9 | Good | Not used | 91 | 99 |
| Example 2 | Radial isoprene polymer 2 which has active ends | 104.9 | Good | Not used | 89 | 100 |
| Example 3 | Radial isoprene polymer 3 which has active ends | 167.7 | Good | Not used | 84 | 98 |
| Example 4 | Radial isoprene polymer 4 which has active ends | 209.7 | Good | Not used | 94 | 88 |
| Example 5 | Radial isoprene polymer 2 which has active ends | 104.9 | Good | Tris(dimethylamino) chlorosiliane | 90 | 92 |
| Comparative Example 1 | Lithiated 1,3,5-trimethylbenzene | 0 | Poor | Not used | 100 | 100 |
| Comparative Example 2 | Radial isoprene polymer 5 which has active ends | 21.0 | Poor | Not used | 91 | 110 |
| Comparative Example 3 | Radial isoprene polymer 6 which has active ends | 62.9 | Poor | Not used | 88 | 101 |

From Table 1, the radial isoprene polymer which has active ends which is obtained by causing 65 to 500 moles of isoprene to react, in the presence of the alkali metal-reacted aromatic compound which is represented by the above general formula (1), with respect to 1 mole of alkali metal in the alkali metal-reacted aromatic compound is excellent in solubility with respect to the cyclohexane of the inert solvent which is used for polymerization and further is used as the starting points of polymerization for copolymerization of 1,3-butadiene and styrene to thereby lower the compound viscosity of the obtained rubber composition. Further, the obtained cross-linked rubber was excellent in wet grip property (Examples 1 to 5).

On the other hand, the lithiated 1,3,5-trimethylbenzene of the alkali metal-reacted aromatic compound which is represented by the above general formula (1) was inferior in solubility with respect to the cyclohexane of the inert solvent which is used for polymerization, therefore was inferior in manufacturing stability (Comparative Example 1) .

Further, if making the amount of the isoprene with respect to 1 mole of the alkali metal in the alkali metal-reacted aromatic compound which is represented by the above general formula (1) less than 65 moles, the obtained radial isoprene polymer which has active ends becomes inferior in solubility with respect to the cyclohexane of the inert solvent which is used for polymerization. Furthermore, when used as the starting points of polymerization for copolymerization of 1,3-butadiene and styrene, the obtained cross-linked rubber was inferior in wet grip property (Comparative Examples 2 and 3).

## Claims

1. A method of production of radial conjugated diene rubber comprising
a first step of causing 65 to 500 moles of isoprene to polymerize, in the presence of an alkali metal-reacted aromatic compound which is represented by the following general formula (1), with respect to 1 mole of an alkali metal in the alkali metal-reacted aromatic compound so as to obtain a radial isoprene polymer which has active ends and
a second step of causing monomers which contain 1,3-butadiene or 1,3-butadiene and an aromatic vinyl compound to polymerize to the active ends of the radial isoprene polymer. 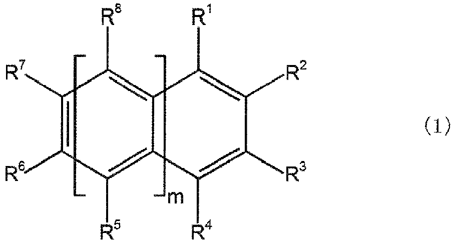 wherein in the general formula (1), R¹ to R⁸ respectively independently are a group which is selected from a hydrogen atom, C₁ to C₁₀ alkyl group, and C₁ to C₁₀ alkali metal-reacted alkyl group having an alkali metal atom bonded to the α-position, and three or more of R¹ to R⁸ are C₁ to C₁₀ alkali metal-reacted alkyl groups having an alkali metal atom bonded to the α-position. "m" is an integer of 0 to 5, when "m" is 2 or more, regardless of the structure expressed by general formula (1), three or more benzene rings may be condensed with each other at any positions.

2. A radial conjugated diene rubber obtained by the method of production according to claim 1.

3. A modified radial conjugated diene rubber obtained by causing a modifier to react with the active ends of the radial conjugated diene rubber according to claim 2.

4. A rubber composition comprising 100 parts by weight of a rubber ingredient which contains the radial conjugated diene rubber according to claim 2 or the modified radial conjugated diene rubber according to claim 3 and 10 to 200 parts by weight of silica.

5. The rubber composition according to claim 4 which further contains a cross-linking agent.

6. The cross-linked rubber obtained by cross-linking the rubber composition according to claim 5.

7. A tire which contains the cross-linked rubber according to claim 6.

## Patentansprüche

1. Verfahren zur Herstellung eines radialen konjugierten Dienkautschuks, umfassend:
einen ersten Schritt des Polymerisierenlassens von 65 bis 500 Mol Isopren in Gegenwart einer Alkalimetall-umgesetzten aromatischen Verbindung, welche durch die folgende allgemeine Formel (1) dargestellt wird, bezüglich 1 Mol eines Alkalimetalls in der Alkalimetall-umgesetzten aromatischen Verbindung, um so ein radiales Isoprenpolymer, welches aktive Enden aufweist, zu erhalten, und
einen zweiten Schritt des Polymerisierenlassens von Monomeren, welche 1,3-Butadien oder 1,3-Butadien und eine aromatische Vinylverbindung enthalten, an die aktiven Enden des radialen Isoprenpolymers 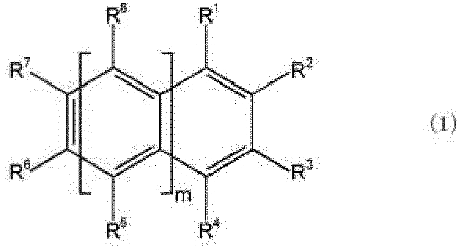 wobei in der allgemeinen Formel (1) R¹ bis R⁸ jeweils unabhängig eine Gruppe sind, welche ausgewählt ist aus einem Wasserstoffatom, einer C₁- bis C₁₀-Alkylgruppe und einer C₁- bis C₁₀-Alkalimetall-umgesetzten Alkylgruppe mit einem Alkalimetallatom, das an die α-Position gebunden ist, und drei oder mehr aus R¹ bis R⁸ C₁- bis C₁₀-Alkalimetall-umgesetzte Alkylgruppen mit einem an die α-Position gebundenen Alkalimetallatom sind, "m" eine ganze Zahl von 0 bis 5, und wenn "m" 2 oder mehr ist, unabhängig von der durch die allgemeine Formel (1) ausgedrückten Struktur drei oder mehr Benzolringe miteinander an beliebigen Positionen kondensiert sein können.

2. Radialer konjugierter Dienkautschuk, erhalten durch das Herstellungsverfahren gemäß Anspruch 1.

3. Modifizierter radialer konjugierter Dienkautschuk, erhalten durch Reagierenlassen eines Modifikators mit den aktiven Enden des radialen konjugierten Dienkautschuks gemäß Anspruch 2.

4. Kautschukzusammensetzung, umfassend 100 Gewichtsteile eines Kautschukinhaltsstoffes, welcher den radialen konjugierten Dienkautschuk gemäß Anspruch 2 oder den modifizierten radialen konjugierten Dienkautschuk gemäß Anspruch 3 enthält, und 10 bis 200 Gewichtsteile Siliciumdioxid.

5. Kautschukzusammensetzung gemäß Anspruch 4, welche des Weiteren ein Vernetzungsmittel enthält.

6. Vernetzter Kautschuk, erhalten durch Vernetzen der Kautschukzusammensetzung gemäß Anspruch 5.

7. Reifen, welcher den vernetzten Kautschuk gemäß Anspruch 6 enthält.

## Revendications

1. Procédé de production d'un caoutchouc diénique conjugué radial comprenant
une première étape pour amener 65 à 500 moles d'isoprène à polymériser, en présence d'un composé aromatique ayant réagi avec un métal alcalin qui est représenté par la formule générale (1) suivante, par rapport à 1 mole d'un métal alcalin dans le composé aromatique ayant réagi avec un métal alcalin afin d'obtenir un polymère d'isoprène radial qui possède des extrémités actives et
une seconde étape pour amener des monomères qui contiennent du 1,3-butadiène ou le 1,3-butadiène et un composé vinylique aromatique à polymériser sur les extrémités actives du polymère d'isoprène radial. 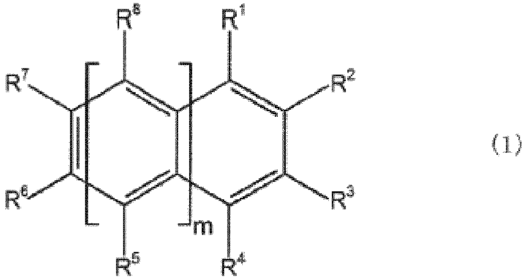 dans lequel dans la formule générale (1), R¹ à R⁸ sont respectivement indépendamment un groupe qui est sélectionné parmi un atome d'hydrogène, un groupe alkyle en C₁ à C₁₀, et un groupe alkyle en C₁ à C₁₀ ayant réagi avec un métal alcalin contenant un atome de métal alcalin lié à la position α, et trois ou plus de trois parmi R¹ à R⁸ sont des groupes alkyle en C₁ à C₁₀ ayant réagi avec un métal alcalin contenant un atome de métal alcalin lié à la position α. « m » est un nombre entier allant de 0 à 5, quand « m » est 2 ou plus de 2, quelle que soit la structure exprimée par la formule générale (1), trois ou plus de trois cycles benzène peuvent être condensés les uns avec les autres à n'importe quelle position.

2. Caoutchouc diénique conjugué radial obtenu par le procédé de production selon la revendication 1.

3. Caoutchouc diénique conjugué radial modifié obtenu en amenant un modificateur à réagir avec les extrémités actives du caoutchouc diénique conjugué radial selon la revendication 2.

4. Composition de caoutchouc comprenant 100 parties en poids d'un ingrédient de caoutchouc qui contient le caoutchouc diénique conjugué radial selon la revendication 2 ou le caoutchouc diénique conjugué radial modifié selon la revendication 3 et 10 à 200 parties en poids de silice.

5. Composition de caoutchouc selon la revendication 4 qui contient en outre un agent de réticulation.

6. Caoutchouc réticulé obtenu par la réticulation de la composition de caoutchouc selon la revendication 5.

7. Pneu qui contient le caoutchouc réticulé selon la revendication 6.
